Europäisches Patentamt

European Patent Office

Office européen des brevets

(11) Veröffentlichungsnummer: **0 289 931 B1**

# EUROPÄISCHE PATENTSCHRIFT

(45) Veröffentlichungstag der Patentschrift: 09.10.91

(51) Int. Cl.⁵: **B65G 1/10**

(21) Anmeldenummer: 88106756.5

(22) Anmeldetag: 27.04.88

(54) **Lagersystem für Container.**

(30) Priorität: 05.05.87 DE 3714850

(43) Veröffentlichungstag der Anmeldung:
09.11.88 Patentblatt 88/45

(45) Bekanntmachung des Hinweises auf die
Patenterteilung:
09.10.91 Patentblatt 91/41

(84) Benannte Vertragsstaaten:
AT BE CH DE ES FR GB GR IT LI LU NL SE

(56) Entgegenhaltungen:
GB-A- 1 512 396
US-A- 3 078 102
US-A- 3 452 699

(73) Patentinhaber: FLENDER WERFT AKTIENGE-
SELLSCHAFT
Seelandstrasse
W-2400 Lübeck(DE)

(72) Erfinder: Zehm, Wolfgang, Dipl.-Ing.
Scheteligstrasse 8
W-2400 Lübeck-Travemünde(DE)

(74) Vertreter: Wilcken, Hugo, Dr. et al
Patentanwälte Dr. Hugo Wilcken Dipl.-Ing.
Thomas Wilcken Musterbahn 1
W-2400 Lübeck(DE)

Rank Xerox (UK) Business Services

## Beschreibung

Die Erfindung betrifft ein Lagersystem für Container, insbesondere für die Zwischenlagerung von Containern in Container-Terminals.

Bei der Zwischenlagerung von Containern, beispielsweise auf Hafengelände, kommt es darauf an, den teuren Lagerplatz möglichst wirtschaftlich zu nutzen und den Umschlag in rationeller Weise abzuwickeln. Diese Notwendigkeit gewinnt um so mehr an Bedeutung, als die Prognosen von einer steigenden Tendenz in der Verwendung von Containern als Transportmittel ausgehen.

In der Lagertechnik sind Hochregallager bekannt und auch in der Industrie eingeführt, welche üblicherweise fest installiert sind und mit Gabelstaplern beschickt werden. Die Beschickung und Entnahme erfolgt dabei vollautomatisch durch Adressierung des Stapelgerätes entsprechend Plänen, die unter Berücksichtigung der unterschiedlichsten Kriterien erstellt werden. Solche Lager sind aber nicht für schwere beladene Transport-Container geeignet, zumal sie auch keinen unmittelbaren Zugriff auf die Container mit einem Transportmittel ermöglichen und außerdem viel Platz beanspruchen würden.

Andere, auf Schienen verfahrbare Lagergerüste für container sind beispielsweise durch die GB-A-1 512 396 bekannt geworden.

Es ist die Aufgabe der Erfindung, ein Lagersystem für Container, z.B. der ISO-Größen zwanzig oder vierzig Fuß, vorzuschlagen, welches geeignet ist, Container in flächensparender Anordnung unterzubringen und dabei direkte Zugriffmöglichkeiten auf jeden gestauten Container zu ermöglichen. Darüberhinaus soll erreicht werden, daß das Verbringen der Container von der Löschstelle ins Lager die Kapazität der Löschgeräte nicht mindert und das spätere automatische Auffinden der einzelnen Container einfach möglich wird.

Diese Aufgabe wird erfindungsgemäß dadurch gelöst, daß mehrere spurgebundene Lagergerüste ein Hochregallager bilden und mit treppenstufenartig zueinander versetzten, Stellplätze für jeweils mindestens einen Container bildenden Aufnahmen versehen sind und daß die Lagergerüste einzeln und in Gruppen verfahrbar sind, um sie wahlweise ineinander zu verschachteln oder auf Abstand zueinander zu bringen.

Die mit diesem Lagersystem erzielbaren Vorteile bestehen insbesondere darin, daß die Container in einer bezüglich ihrer Lagerposition und -höhe versetzten Anordnung in den Aufnahmen jedes Lagergerüstes abgestellt werden können, wobei jeder Container ohne kostspieliges Umstauen direkt zugänglich bleibt und wobei die Lage der einzelnen Container so genau definiert ist, daß das Anfahren, Aufheben und Absetzen der Container über eine Programmsteuerung automatisiert werden kann.

Um das Verfahren der Lagergerüste und das Positionieren derselben unter platzsparender Verschachtelung zu ermöglichen, ist vorgesehen, daß die Lagergerüste mit Laufrädern in Form von Spurrollen auf zwei parallelen Paaren von Schienen laufen, wobei die vorn bzw. im vorgesehenen Verschachtelungs- oder Eingriffsbereich von zwei benachbarten Lagergerüsten angeordneten Laufräder auf den beiden innen liegenden Schienen und die anderen Laufräder auf den beiden äußeren Schienen laufen, und daß die Lagergerüste vorn, im Bereich der innen laufenden Laufräder schmaler sind als hinten, so daß die Lagergerüste im Prinzip nach Art der in Kaufhäusern gebräuchlichen Einkaufswagen ineinander geschoben werden können und dabei wenig Lagerplatzfläche benötigen. Außerdem sind die Konstruktion der Aufnahmen und die Tragkonstruktion der Lagergerüste so gestaltet, daß die auf den Aufnahmen abgestellten Container zumindest von oben her mit einem Hebezeug oder auch an der Längsseite mit einem Gabelstabler frei zugänglich sind.

Das ungehinderte Ineinanderschieben und Auseinanderfahren der mit Containern beladenen Lagergerüste ist weithin dadurch möglich, daß der vertikale Abstand zwischen den horizontalen Abstellflächen zweier benachbarter Aufnahmen eines jeden Lagergerüstes größer ist als die Höhe der abzustellenden Container, wodurch erreicht wird, daß jeweils übereinander befindliche Container von ineinander geschobenen Lagergerüsten ohne gegenseitige Berührung verbleiben. Jede Aufnahme wird zweckmäßigerweise im wesentlichen durch einen rechteckigen Rahmen gebildet, der in seinen Abmessungen an die Kontur des abzustellenden Containers angepaßt und mit Mitteln zum Befestigen und Positionieren der Container ausgestattet ist. Im übrigen ist es auch möglich, mehr als einen Container auf den dann entsprechend groß zu bemessenden Aufnahmen abzustellen.

Für das Verfahren der Lagergerüste ist jedes derselben mit einem Fahrantrieb versehen oder mindestens ein externer Antrieb vorgesehen, der parallel zu den erwähnten Schienen verfahrbar und mit wenigstens einem der Lagergerüste über eine Kupplung verbindbar ist.

In weiterer vorteilhafter Ausgestaltung kann mindestens ein stationärer Antrieb mit einem endlos geführten Zugorgan in Form eines Seiles oder einer Kette vorgesehen sein, welches über Mitnehmer mit wenigstens einem Lagergerüst kuppelbar ist.

Schließlich kann eine Automatisierung des Containerumschlages durchgeführt werden dadurch, daß die jeweilige Stellung der Lagergerüste und der auf diesen befindlichen Container mittels einer Abtasteinrichtung erfaßt und einer zentralen Steuerstelle zugeführt wird, die entsprechend einem einzugebenden Programm die Verstellbewegungen der Lagergerüste steuert und regelt.

Das erfindungsgemäße Lagersystem wird nachfolgend anhand eines in der Zeichnung dargestellten Ausführungsbeispieles näher erläutert. Es zeigen:

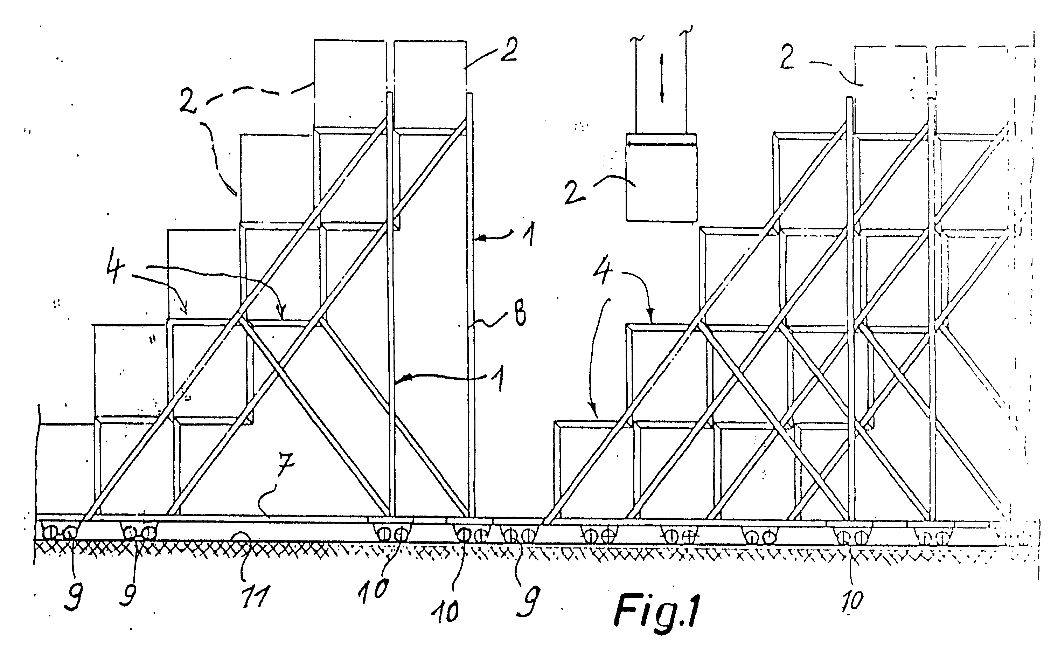

Figur 1    ein zum Zwecke der Entnahme eines innen liegenden Containers in zwei Teilgruppen auseinandergefahrenes Lagersystem,

Figur 2    die Seitenansicht eines einzelnen Lagergerüstes,

Figur 3    eine Draufsicht auf das Lagergerüst nach Figur 2, im Halbschnitt dargestellt,

Figur 4    eine Vorderansicht des Lagergerüstes nach Figur 2,

Figur 5    eine Teilansicht des Fahrwerkes eines Lagergerüstes mit Antriebseinheit und

Figur 6    das Wirkschema einer automatischen Kontrolle und Steuerung des erfindungsgemäßen Lagersystems.

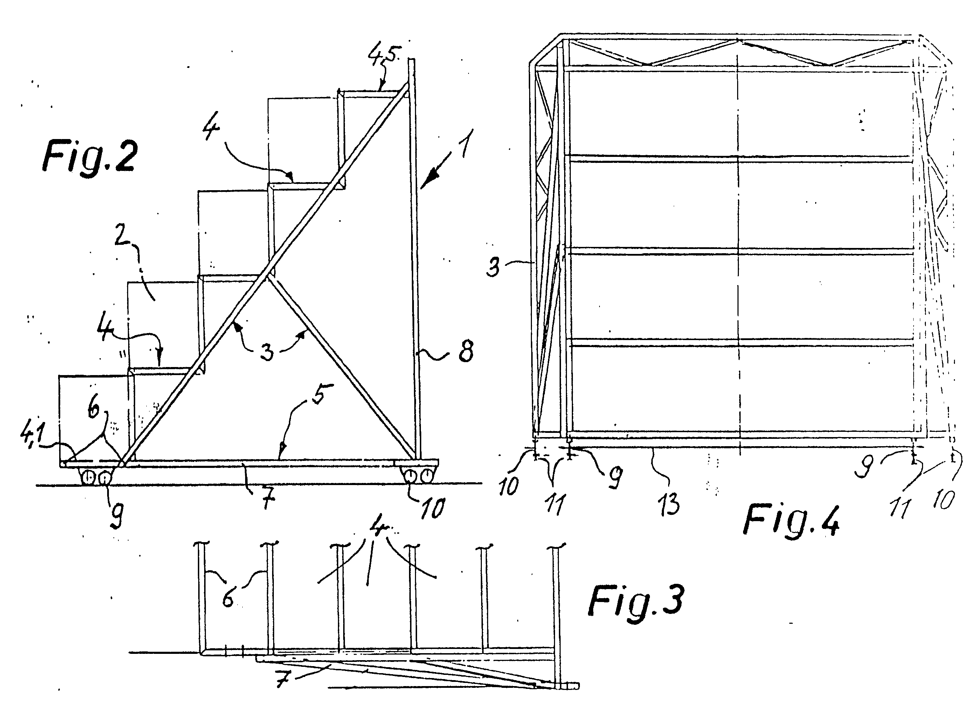

Das Lagersystem wird aus einer Vielzahl gleichartiger Bausteine in Form von jeweils mehrere Container 2 aufnehmenden Lagergerüsten 1 gebildet, die unter Verschachtelung durch teilweisen gegenseitigen Eingriff zu Gruppen zusammenstellbar sind. Jedes Lagergerüst 1 besteht zu diesem Zweck aus einem Traggestell 3, das aus verstrebten, entsprechend der vorgesehenen Beanspruchung dimensionierten Tragprofilen erstellt ist. Die Lagerung der Container erfolgt in treppenstufenartig an dem Traggestell 3 angeordneten Aufnahmen 4. Diese haben die Form von den Grundflächen der Container 2 angepaßten Rahmen, die so angelegt sind, daß sie in der Draufsicht (Figur 3) auf das Lagergerüst bzw. Traggestell als unmittelbar aneinander anschließend erscheinen, in der Höhe aber so versetzt sind (Figur 2), daß der vertikale Abstand zwischen den Abstellflächen zweier benachbarter Aufnahmen 4 größer ist als die Höhe der aufzunehmenden Container 2.

Der untere Teil 5 des Traggestells 3 hat im wesentlichen die Gestalt eines flachgelegten U, dessen am vorderen Bereich jedes Lagergerüstes 1 befindliches Joch 6 aus dem Rahmen der untersten Aufnahme 4.1 besteht und dessen Schenkel 7 von dort aus nach hinten divergierend verlaufen. Von den freien Enden der Schenkel 7 ragen Stützen 8 auf, die den Rahmen der obersten Aufnahme 4.5 an seiner Rückseite abstützen.

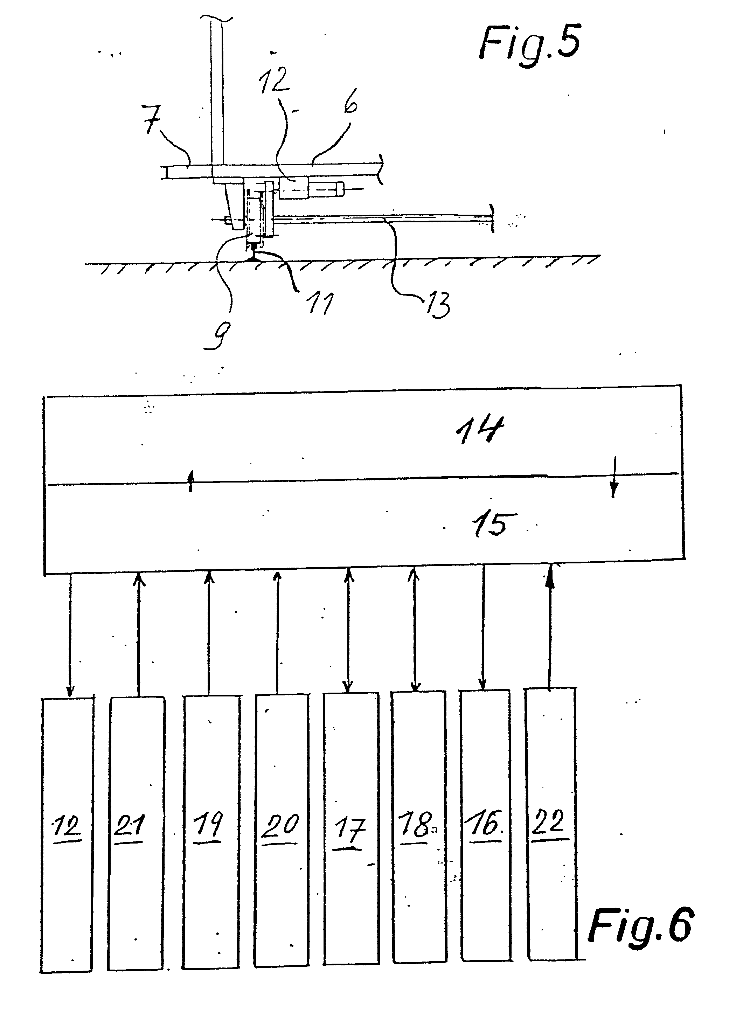

Der besagte U-förmige untere Teil 5 des Traggestelles 3 ist als Fahrwerk ausgebildet und zu diesem Zweck mit Laufrädern in Form von Spurrollen 9 und 10 abgestützt. Diese sind im Bereich der Ansätze der Schenkel 7 an dem Joch 6 und am Fußpunkt der Stützen 8 angeordnet und gelagert, wobei sich aufgrund der Divergenz der Schenkel 7 für die hinten im Bereich der Stützen 8 befindlichen Spurrollen 10 eine größere Spurweite ergibt als für die vorn im Bereich des Joches 6 angebrachten Spurrollen 9. Die Spurrollen 9 und 10 laufen auf in dem Lagerplatz eingelassenen Paaren von Schienen 11, die dementsprechend symmetrisch und parallel zueinander verlegte Gleise unterschiedlicher Spurweite bilden. Das Fahrwerk ist gemäß Figur 5 mit einem elektrischen Getriebemotor 12 versehen, der die Spurrollen 9 über eine diese verbindende Welle 13 antreibt und seine elektrische Energie aus einem Schleppkabel oder über geeignete Stromschienen erhält. Im übrigen kann jedes Lagergerüst auch mit mehreren synchron gesteuerten Getriebemotoren ausgestattet sein.

Ein solches mit dem beschriebenen Lagersystem organisiertes Lager eignet sich aufgrund der exakt mit Sensoren definierbaren Lage jedes einzelnen Containers zur Integration in einein teil- oder vollautomatisiertes Container-Terminal. Die Steuerung und Überwachung kann dabei eine Steuerschaltung übernehmen, deren Wirkschema in Figur 6 gezeigt ist. Zentrale Einheit ist ein Datenspeicher 14, der mit einem Steuerungsrechner 15 in Wechselverbindung steht. Dieser bedient die Getriebemotoren 12 der Fahrwerke der Traggestelle 3 sowie ein Anzeigesystem 16 für die Kontrolle der Belegung und steht in Wechselverbindung mit eventuell vorhandenen externen Datenspeichern 17 und Transportmittelrechnern 18. Eine Versorgung des Steuerungsrechners 15 mit Ist-Daten erfolgt durch geeignete Sensoren 19 und 20, die z.B. den Abschluß der Freistellung eines Lagerplatzes zur Ein- oder Auslagerung signalisieren, sowie durch ein Identifikations- und Lageerkennungssystem 21, das eine Positionskontrolle und eventuelle Korrektur der Position ermöglicht. Die abgeschlossenen Einzelvorgänge lassen sich durch eine Besetzterkennung 22 quittieren, die wahlweise auch extern angesteuert werden kann.

Der Funktionsablauf des erfindungsgemäßen Lagesystems bei der Besetzung des Lagers ist folgender: Dem Datenspeicher 14 werden zunächst Daten über die Container-Kennung und Größe eingegeben. Die Eingabe kann von Hand erfolgen oder von einem anderen Rechner übergeben werden. Gleichzeitig können auch weitere Daten, wie Gewicht, Bestimmung, Gefahrenklasse des Transportgutes u.s.w., mit eingegeben werden. Die Eingabe kann in Form von Listen erfolgen, deren Folge gespeichert wird. Der Steuerungsrechner 15 legt daraus einen freien Stellplatz fest, wobei eine Optimierung anzustreben ist, so daß der nächste freie Stellplatz mit möglichst wenig Bewegung der Lagergerüste erreicht wird. Auch andere Kriterien können zusätzlich berücksichtigt werden, wie Bestimmung, Gefahrenklasse u.s.w., wenn entsprechende Daten mit eingegeben sind.

Die Lage des ermittelten Stellplatzes und die Container-Kennung werden an das Transportmittel, wie beispielsweise ein fahrbarer Kran, weitergegeben, was durch direkte Übermittelung an den Transportmittelrechner 18 oder durch Aktivierung optischer Anzeigemittel geschehen kann, die die Bedienungsperson des Transportmittels lesen kann. In dem nächsten Funktionsschritt werden die Getriebemotoren 12 der für die Freistellung des vorgesehenen Stellplatzes zu verfahrenden Lagergerüste 1 angesteuert. Die Steuerung ist dabei so optimiert, daß nur die notwendigen Bewegungen in folgerichtiger Reihenfolge ausgeführt werden. Die Steuerung berücksichtigt auch die Antriebsleistung, die zum Beschleunigen, Fahren und Verzögern der Lagergerüste benötigt wird, im Hinblick auf die Leistungsgrenzen der Krafteinspeisung.

Die Position des freigestellten Stellplatzes wird durch geeignete Sensoren des Lageerkennungssysteme 21 kontrolliert und eventuell korrigiert, worauf eine entsprechende Rückmeldung der Ist-Werte in dem Steuerungsrechner erfolgt. Der ausgewählte Stellplatz wird nun zum Besetzen freigegeben, was durch optische und/oder akustische Anzeige signalisiert werden kann oder durch direkte Übermittlung an den Transportmittelrechner 18, der das Transportmittel veranlaßt, den bestimmten Container auf dem angewiesenen Stellplatz abzusetzen.

Zum Abschluß des Vorganges meldet die Besetzterkennung 22 die Besetzung des Stellplatzes an den Rechenr 15. Dieser prüft, ob der vorbestimmte Platz besetzt worden ist. Die Daten über die Container-Kennung sowie die Stellplatznummer und eventuelle weitere Daten werden dann in dem Datenspeicher 14 abgelegt und/oder an einen externen Datenspeicher weitergegeben. Damit ist die Anlage frei für eine neue Eingabe bzw. in der Lage, eine nächste Adressierung abzuarbeiten.

Zum Entladen wird die Container-Kennung des entsprechenden zu entnehmenden Containers eingegeben, worauf der Steuerungsrechner 15 den entsprechenden Stellplatz ermittelt. Nach erfolgter Ermittlung ergeht Order an die Getriebemotoren 12 der Fahrwerke derjenigen Lagergerüste, die für das Freistellen des lokalisierten Containers für den Zugriff des Transportmittels zu verfahren sind. Nach Positionskontrolle und eventueller Korrektur erfolgt die Freigabe und Entnahme des Containers, was wiederum durch die Besetzterkennung quittiert wird. Mit der Lösung der Containerdaten oder Ablage derselben in externen Speichern ist der Entladevorgang beendet.

**Patentansprüche**

1. Lagersystem für Container, insbesondere für die Zwischenlagerung von Containern in Container-Terminals, wobei mehrere, spurgebundene Lagergerüste (1) ein Hochregallager bilden und mit treppenstufenartig zueinander versetzten, Stellplätze für jeweils mindenstens einen Container (2) bildenden Aufnahmen (4) versehen sind und wobei die Lagergerüste (1) einzeln und in Gruppen derart verfahrbar sind, daß sie wahlweise ineinander zu verschachteln oder auf Abstand zueinander bringbar sind.

2. Lagersystem nach Anspruch 1, dadurch gekennzeichnet, daß die Lagergerüste (1) mit Laufrädern in Form von Spurrollen (9,10) auf zwei parallelen Paaren von Schienen (11) laufen, wobei die vorn bzw. im vorhergesehenen Eingriffsbereich von zwei benachbarten Lagergerüsten (1) angeordneten Laufräder (9) auf den beiden innen liegenden Schienen und die anderen Laufräder (10) auf den beiden äußeren Schienen laufen, und daß die Lagergerüste (1) vorn, im Bereich der innen laufenden Laufräder (9) schmaler sind als hinten.

3. Lagersystem nach einem der Ansprüche 1 und 2, dadurch gekennzeichnet, daß die Konstruktion der Aufnahmen (4) und die Tragkonstruktion der Lagergerüste (1) so gestaltet sind, daß die auf den Aufnahmen (4) abgestellten Container (2) zumindest von oben mit einem Hebezeug frei zugänglich sind.

4. Lagersystem nach einem der Ansprüche 1 bis 3, dadurch gekennzeichnet, daß der vertikale Abstand zwischen den horizontalen Abstellflächen zweier benachbarter Aufnahmen (4) eines jeden Lagergerüstes (1) größer ist als die Höhe der abzustellenden Container (2).

5. Lagersystem nach einem der Ansprüche 1 bis 4, dadurch gekennzeichnet, daß jede Aufnahme (4) im wesentlichen durch einen rechteckigen Rahmen gebildet wird, der in seinen Abmessungen an die Kontur des abzustellenden Containers (2) angepaßt ist.

6. Lagersystem nach einem der Ansprüche 1 bis 5, dadurch gekennzeichnet, daß die Aufnahmen (4) mit Mitteln zum Festhalten und Positionieren der Container (2) ausgestattet sind.

7. Lagersystem nach einem der Ansprüche 1 bis 6, dadurch gekennzeichnet, daß jedes Lagergerüst (1) einen eigenen Fahrantrieb (12) hat.

8. Lagersystem nach einem der Ansprüche 1 bis 6, dadurch gekennzeichnet, daß mindestens ein externer Antrieb vorgesehen ist, der parallel zu den erwähnten Schienen (11) verfahrbar und mit einem der Lagergerüste (1) über eine Kupplung verbindbar ist.

9. Lagersystem nach einem der Ansprüche 1 bis 6, dadurch gekennzeichnet, daß mindestens ein stationärer Antrieb mit einem endlos geführten Zugorgan in Form eines Seiles oder einer Kette vorgesehen ist, welches über Mitnehmer mit wenigstens einem zu verfahrenden Lagergerüst (1) kuppelbar ist.

10. Lagersystem nach einem der Ansprüche 1 bis 9, dadurch gekennzeinet, daß die jeweilige Stellung der Lagergerüste (1) und der auf diesen befindlichen Container (2) mittels einer Abtasteinrichtung erfaßbar und einer zentralen Steuerstelle zuführbar ist, die entsprechend einem einzugebenden Programm die Verstellbewegungen der Lagergerüste (1) steuert und regelt.

## Claims

1. Storage system for containers, in particular for the intermediate storage of containers in container terminals, in which a plurality of railborne storage stands (1) form a high-level shelf storage and are provided with receivers (4) which are offset in a stepped manner relative to one another and form deposit areas for, in each case, at least one container (2), and in which the storage stands (1) are movable individually or in groups in such a way that they may be selectively interlocked one inside the other or moved into a position spaced apart from one another.

2. Storage system according to claim 1, characterised in that the storage stands (1) run by means of running wheels in the form of guide rolls (9, 10) on two parallel pairs of rails (11), with the running wheels (9) disposed at the front or in the prescribed engagement region of two adjacent storage stands (1) running on the two inner rails and the other running wheels (10) running on the two outer rails, and that the storage stands (1) are narrower at the front, in the region of the inner running wheels (9), than at the rear.

3. Storage system according to one of claims 1 and 2, characterised in that the construction of the receivers (4) and the support structure of the storage stands (1) are designed in such a way that the containers (2) deposited on the receivers (4) are freely accessible at least from above by a lifting apparatus.

4. Storage system according to one of claims 1 to 3, characterised in that the vertical distance between the horizontal deposit surfaces of two adjacent receivers (4) of any one storage stand (1) is greater than the height of the containers (2) to be deposited.

5. Storage system according to one of claims 1 to 4, characterised in that each receiver (4) is basically formed by a rectangular frame whose dimensions are adapted to the contour of the container (2) to be deposited.

6. Storage system according to one of claims 1 to 5, characterised in that the receivers (4) are equipped with means for securing and positioning the containers (2).

7. Storage system according to one of claims 1 to 6, oharacterised in that each storage stand (1) has its own travelling mechanism (12).

8. Storage system according to one of claims 1 to 6, characterised in that at least one external drive is provided, which is movable parallel to said rails (11) and is connectible by a coupling to one of the storage stands (1).

9. Storage system according to one of claims 1 to 6, characterised in that at least one stationary drive having a continuously guided traction element in the form of a cable or chain is provided, which may be coupled by carriers to at least one storage stand (1) which is to be moved.

10. Storage system according to one of claims 1 to 9, characterised in that the position of the storage stands (1) and of the containers (2) situated thereon at any one time may be detected by a scanning device and supplied to a central control point which controls and regulates shifting of the storage stands (1) according to a program input.

## Revendications

1. Système de stockage pour conteneurs, notamment pour le stockage temporaire de conteneurs dans des terminaux de réception de conteneurs, et dans lequel plusieurs structures de stockage guidées (1) forment un magasin élevé à rayonnages, et comportent des supports (4), qui sont décalés les uns par rapport aux autres à la manière de marches d'escalier, et forment des emplacements de rangement pour respectivement au moins un conteneur (2), et dans lequel les structures de stockage (1) peuvent être déplacées individuellement et par groupes de telle sorte qu'on peut au choix les imbriquer les unes dans les autres ou les disposer à une certaine distance réciproque.

2. Système de stockage selon la revendication 1, caractérisé en ce que les structures de stockage (1) roulent, au moyen de roues en forme de galets guidés (9,10) sur deux couples parallèles de rails (11), les galets (9), disposés en avant ou dans la zone prévue de contact de deux structures de stockage voisines (1), circulent sur les deux rails intérieurs, et les autres galets (10) circulent sur les deux rails extérieurs, et en ce que les structures de support (1) sont plus étroites à l'avant, dans la zone des galets intérieurs (9), qu'à l'arrière.

3. Système de stockage selon l'une des revendications 1 et 2, caractérisé en ce que l'agencement des supports (4) et l'ossature porteuse des structures de stockage (1) sont agencés de manière que les conteneurs (2) rangés sur les supports (4) sont librement accessibles au moins à partir du haut au moyen d'un appareil de levage.

4. Système de stockage selon l'une des revendications 1 à 3, caractérisé par le fait que la distance verticale entre une surface horizontale de rangement de deux supports (4), voisins, de chaque structure de stockage (1) est supérieure à la hauteur des conteneurs (2) devant être rangés.

5. Système de stockage selon l'une des revendications 1 à 4, caractérisé par le fait que chaque support (4) est formé essentiellement par un cadre rectangulaire, dont les dimensions sont adaptées aux contours du conteneur (2) devant être rangé.

6. Système de stockage selon l'une des revendications 1 à 5, caractérisé en ce que les supports (4) sont équipés de moyens permettant de maintenir fermement et de positionner les conteneurs (2).

7. Système de stockage selon l'une des revendications 1 à 6, caractérisé en ce que chaque structure de stockage (1) possède son propre dispositif de déplacement (12).

8. Système de stockage selon l'une des revendications 1 à 6, caractérisé en ce qu'il est prévu au moins un dispositif externe d'entraînement, qui est déplaçable parallèlement aux rails (11) mentionnés et peut être raccordé par l'intermédiaire d'un accouplement à l'une des structures de stockage (1).

9. Système de stockage suivant l'une des revendications 1 à 6, caractérisé par le fait qu'il est prévu au moins un dispositif fixe d'entraînement comportant un organe de traction guidé sans fin sous la forme d'un câble ou d'une chaîne et qui peut être accouplé, par l'intermédiaire d'organes d'entraînement, à au moins une structure de stockage (1) devant être déplacée.

10. Système de stockage selon l'une des revendications 1 à 9, caractérisé en ce que la position respective des structures de stockage (1) et des conteneurs (2) situés sur ces structures peut être détectée au moyen d'un dispositif d'exploration et être envoyée à un poste central de commande, qui commande et règle les mouvements de déplacement des structures de stockage (1) en fonction d'un programme devant être introduit.

Fig.1

EP 0 289 931 B1

Fig.2

Fig.3

Fig.4

*Fig.5*

*Fig.6*